# EUROPEAN PATENT SPECIFICATION

(11) **EP 3 646 976 B1**
(45) Date of publication and mention of the grant of the patent: **10.04.2024**
(21) Application number: 18823466.0
(22) Date of filing: 15.06.2018
(51) Int. Cl.: B23C 5/10

(54) **BALL END MILL**
KUGELSCHAFTFRÄSER
FRAISE À EMBOUT SPHÉRIQUE

(30) Priority: 30.06.2017 JP 2017129639
(43) Date of publication of application: 06.05.2020
(73) Proprietor: Union Tool Co., Tokyo 140-0013 (JP)
(72) Inventor: KOSHIO, Junichi, Tokyo 140-0013 (JP); WATANABE, Hidehito, Tokyo 140-0013 (JP)
(74) Representative: Kramer Barske Schmidtchen Patentanwälte PartG mbB
(86) International application number: PCT/JP2018/022950
(87) International publication number: WO 2019/003965

(56) References cited:
- JP-A- H1 080 816
- JP-A- H09 192 915
- JP-A- H10 151 511
- JP-A- H10 249 623
- JP-A- H11 156 622
- US-A- 5 833 402

## Description

### TECHNICAL FIELD

The present invention pertains to a ball end mill.

### BACKGROUND ART

In recent years, ball end mills having a hemispherical tip part for the purpose of finishing have been proposed (refer to Patent Document 1, etc.).

### [Prior Art Documents]

[Patent Document 1] Japanese Unexamined Patent Publication No. 2016-112678
JP H10 249623 A discloses another ball end mill.

### SUMMARY OF THE INVENTION

### PROBLEMS TO BE SOLVED BY THE INVENTION

However, the ball end mills disclosed in Patent Document 1, etc., and having a hemispherical tip part have a problem in which the cutting depth is extremely shallow and cutting cannot be substantially performed because there is no ball-nosed end cutting edge.

Furthermore, cutting resistance is high at the tip part because the tip part does not have a chisel edge, resulting in damage to the tool and deterioration in the characteristics of the workpiece surface that is to be processed using the tip part.

The present invention solves the problem described above and provides a practical ball end mill which is capable of performing both cutting and polishing well and in which cutting resistance at the tip part is low.

### MEANS FOR SOLVING THE PROBLEM

The present invention is described hereinafter with reference to the annexed drawings.

A first mode of the present invention pertains to a ball end mill according to claim 1.

A second mode of the present invention pertains to the ball end mill according to the first mode, wherein a flank 7 is provided so as to be connected to the side of the tip surface 4 oriented rearward with respect to the tool-rotation direction.

A third mode of the present invention pertains to the ball end mill according to any of the first to second modes, wherein an edge-perpendicular width W of the tip surface 4 is 0.5-25% inclusive of the outer diameter of the tool.

A fourth mode of the present invention pertains to the ball end mill according to the third mode, wherein the edge-perpendicular width W of the tip surface 4 is 2.5-20% inclusive of the outer diameter of the tool.

A fifth mode of the present invention pertains to the ball end mill according to any of the first to fourth modes, wherein the distance from the tool rotation center to the point closest to the tool rotation center on the other one or ones of the plurality of ball-nosed end cutting edges that is or are not the center-nearing ball-nosed end cutting edge is 2-10% inclusive of the outer diameter of the tool and at least 1.3 times the distance from the tool rotation center to the point closest to the tool rotation center on the center-nearing ball-nosed end cutting edge.

An sixth mode of the present invention pertains to the ball end mill according to any of the first to fifth modes, wherein the number of ball-nosed end cutting edges is exactly two, three, or four.

A seventh mode of the present invention pertains to the ball end mill according to any of the first to sixth modes, wherein the tip surface is a sphere surface, or has a shape that approximates a convex sphere surface having the tool rotation center as the apex, or a shape that includes a convex curved surface.

### EFFECTS OF THE INVENTION

As a result of the configuration described above, the present invention is a practical ball end mill which is capable of performing both cutting and polishing well and in which cutting resistance is low at the tip part.

### BRIEF DESCRIPTION OF THE DRAWINGS

FIG. 1 is an approximate explanatory front view of the present example;
FIG. 2 is an approximate explanatory side view of the present example;
FIG. 3 shows comparative photographs of the processed surface;
FIG. 4 is an approximate explanatory front view of separate example 1;
FIG. 5 is an approximate explanatory front view of separate example 2;
FIG. 6 is an approximate explanatory front view of separate example 3;
FIG. 7 is a table that shows experiment results;
FIG. 8 is a table that shows experiment conditions and a graph and photographs that show experiment results;
FIG. 9 is a table that shows test results;
FIG. 10 is a table that shows experiment results;
FIG. 11 is an explanatory drawing that shows one example of the method for confirming a spherical surface;
FIG. 12 is an explanatory drawing that shows the theoretical height value *h*;
FIG. 13 is an explanatory drawing that shows one example of a screen representing an actual measurement screen taking using a measurement device;
FIG. 14 is an explanatory drawing that explains the inclination of the approximation straight line;
FIG. 15 is an explanatory drawing that shows one example of the measurement method for *R* on the tip of the ball end mill;
FIG. 16 is a table that shows measurement results; and
FIG. 17 is a table that shows measurement results.

### MODE FOR CARRYING OUT THE INVENTION

Preferred embodiments of the present invention are briefly described hereinafter by showing the effect of the present invention on the basis of the drawings.

Cutting is performed by ball-nosed end cutting edges 5, 6 and polishing is performed by a tip surface 4. Namely, by cutting a workpiece surface and rubbing the cut surface, a lustrous processed surface having a low surface roughness can be obtained.

Furthermore, biting performance on the workpiece is improved and cutting resistance is lowered even without having a chisel edge on the tip part because of the presence of a center-nearing ball-nosed end cutting edge 5 that is disposed so as to be biased toward the rotation center. In addition, rigidity is increased near the center due to the other ball-nosed end cutting edge 6 being positioned away from the center and not coming close to the center. Accordingly, damage to the ball-nosed end cutting edges 5, 6 and deterioration of the characteristics of the workpiece surface can be suppressed.

### EXAMPLES

Specific examples of the present invention are described hereinafter on the basis of the drawings.

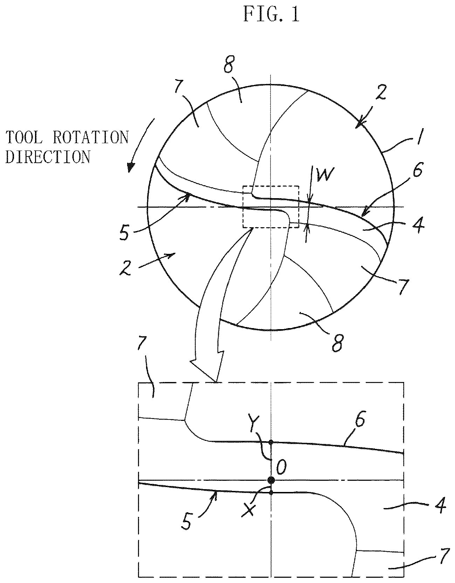

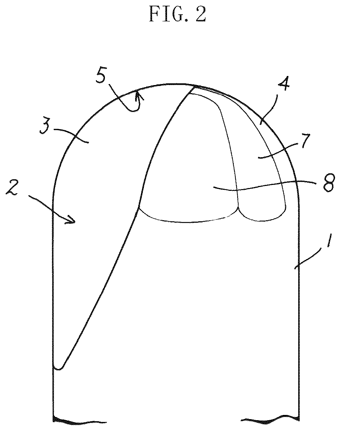

As illustrated in FIG. 1 and 2, the present example is a ball end mill formed with a plurality of chip discharge grooves 2 on an outer periphery of a tool body 1 from a tool tip toward a proximal end side, and provided with ball-nosed end cutting edges 5, 6 on a crossing ridgeline part between a rake surface 3 of the chip discharge grooves 2 and a tip surface 4 of the tool body 1, wherein the ball end mill has a tool rotation center O on the tip surface 4 and a center-nearing ball-nosed end cutting edge 5 set so that a distance X from the tool rotation center O to the point that is closest to the tool rotation center O on one ball-nosed end cutting edge 5 in a view of the tool tip is shorter than a same distance Y to the other ball-nosed end cutting edge 6.

In the present example, an edge part is formed by joining a hemispherical cubic boron nitride (CBN) material by means of welding, etc., to the tip of a shank-side member made from cemented carbide, performing groove processing, and sharpening the CBN material that is on the tip. The present example is a two-edge ball end mill provided with two chip discharge grooves and two ball-nosed end cutting edges, and is used especially for finishing.

The tip surface 4 is formed by allowing a part of the outer surface (hemispherical surface) of the pre-sharpening CBN material to remain without performing additional processing. Namely, the tip surface comes to have the above shape due to chamfering, etc., not being applied to the section that includes the tool rotation center O and corresponds to the tip surface when the pre-processing CBN material is sharpened to provide gashes, rake surfaces, flanks, etc. In addition, the tip surface 4 may also optionally be formed by performing cutting/polishing, etc., after the sharpening is performed. Furthermore, the material of the tip is not limited to being CBN; and other configurations, such as forming the entire tip out of cemented carbide, may optionally be used.

The tip surface 4, which is part of the spherical surface of the hemispherical CBN material, comes to be disposed on the side of each of the ball-nosed end cutting edges 5, 6 oriented rearward with respect to the tool-rotation direction due to processing not being applied to the section that corresponds to the tip surface when the sharpening is performed.

In the present example, the tip surface 4 is a sphere surface that comes into sliding contact with a surface cut by the ball-nosed end cutting edges 5, 6. Namely, the tip surface 4 is not a surface that is recessed with respect to the ball-nosed end cutting edges 5, 6, but is instead rubbed against the cutting surface (finished surface) of the workpiece during rotational processing. A polishing action is exhibited by the tip surface 4 coming into sliding contact with the cutting surface. In addition, the tip surface 4 is not limited to being a sphere surface; any configuration capable of exhibiting a polishing action by coming into sliding contact with the surface cut by the ball-nosed end cutting edges 5, 6 can be adopted, as appropriate. Any shape that roughly conforms to a convex sphere surface having the tool rotation center O as the apex, such as, for example, a tiered surface that approximates a sphere surface, can be adopted, as appropriate. Furthermore, any configuration capable of exhibiting the polishing action can be adopted, as appropriate, even if the configuration is a shape that includes a curved surface (a convex curved surface) that bulges outward from the ball end mill (even if the configuration is not a shape that approximates the convex sphere surface).

In addition, a flank 7 is provided so as to be connected to the side of the tip surface 4 oriented rearward with respect to the tool-rotation direction. The edge-perpendicular width W of the tip surface 4 can be set, as appropriate, depending on the way the flank 7 is provided, in order to adjust the amount of contact with the surface cut by the ball-nosed end cutting edges 5, 6. In the present example, a second flank 8 is further provided so as to be connected to the first flank 7.

The edge-perpendicular width W of the tip surface 4 is set to be 0.5-25% inclusive of an outer diameter of the tool (diameter of the tip part of the edge part) . Specifically, the width W is set within the above numerical range throughout the entire area of the tip surface 4. In the present example, the width W has a minimum value on the tip surface 4 in the region on the side of the center-nearing ball-nosed end cutting edge 5 oriented rearward with respect to the tool-rotation direction, and a maximum value in the region on the side of the ball-nosed end cutting edge 6 oriented rearward with respect to the tool-rotation direction. The removal effect (polishing effect) on the cutting traces left by the ball-nosed end cutting edges 5, 6 is not fully exhibited if the width W is less than 0.5%, and gouging of the processed surface occurs if the width W is more than 25%. An especially good removal effect is obtained on the cutting traces when the width W is set to 2.5-20% inclusive as is preferred.

Furthermore, the center-nearing ball-nosed end cutting edge 5 is provided in order to prevent an increase in cutting resistance at the tip part caused by the tip surface 4.

Namely, the cutting resistance is lowered due to the ball-nosed end cutting edges not being disposed symmetrically with respect to the tool rotation center O and at least one ball-nosed end cutting edge passing nearer to the center of the tool tip part than the other ball-nosed end cutting edges. Although the tool body vibrates when the edges are placed at unequal positions in generic ball end mills in which ball-nosed end cutting edges are formed using rake surfaces and flanks, when the ball-nosed end cutting edges are formed using a rake surface 3 and a tip surface 4 as in the present example, the tool body 1 does not vibrate and good processing is possible even when the center-nearing ball-nosed end cutting edge 5 is provided because vibrations do not occur regardless of the positioning of the edges.

The distance X from the tool rotation center O to the point closest to the tool rotation center O on the center-nearing ball-nosed end cutting edge 5 is set to be more than 0% and at most 3% of the outer diameter of the tool. This is because the reduction effect on the cutting resistance is not achieved when the distance X is more than 3% of the outer diameter of the tool, and the removal effect on the cutting traces is not fully exhibited when there is not even a small distance.

Furthermore, the distance Y from the tool rotation center O to the point closest to the tool rotation center O on the other ball-nosed end cutting edge 6 is preferably set to 2-10% inclusive of the outer diameter of the tool and at least 1.3 times the distance X. Setting the distance Y to be at least 1.3 times the distance X allows for a better processed surface due to the anti-vibration effect that results from the unequal proportion.

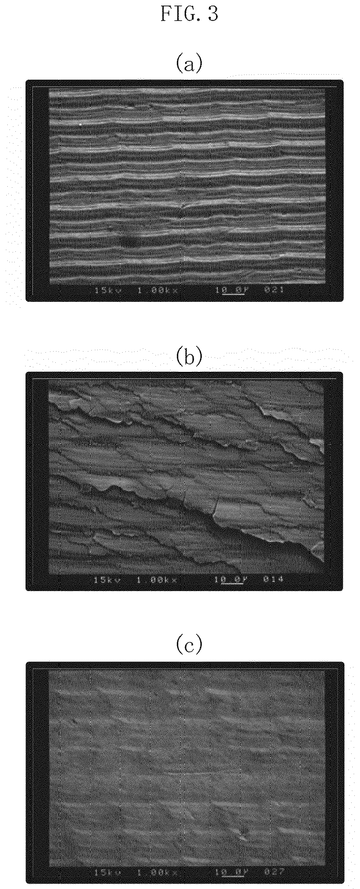

As a result of the above configuration, the present example is capable of reducing the surface roughness of the processed surface of the workpiece and achieving a beautiful luster due to the cutting by the ball-nosed end cutting edges 5, 6 and the rubbing by the tip surface 4 during processing. Namely, cutting traces and a so-called cutter mark appear on the processed surface of the workpiece (refer to FIG. 3(a)) when the processing is performed by using a normal rotational cutting tool in which the cutting edge is formed on a crossing ridgeline part between a rake surface and a flank. This cutter mark causes the workpiece surface to lose its luster and causes a deterioration of surface roughness.

In addition, ball end mills having a hemispherical tip part for the purpose of finishing, such as the one in Patent Document 1, can only be used for an extremely shallow cutting depth due to only being intended for rubbing and not having a cutting edge, and require a severe processing environment in which, *inter alia,* high-precision processing machines must be used and a constant temperature must be maintained for a long period of time to maintain machine postures. Stock to leave from pre-finishing processing must be made uniform and the cutting depth from the finishing must also be made uniform in such an environment before the processed surface that is the objective is finally obtained. When a tool having only a sphere surface that lacked ball-nosed end cutting edges on the tip, similar to the tool in Patent Document 1, was actually fabricated and used to perform finishing in the absence of the severe processing environment described above, gouging occurred on the processed surface and a luster could not be obtained (refer to FIG. 3(b)).

To this point, in the present example, the cut line cut by the ball-nosed end cutting edges 5, 6 had a beautiful surface quality that had been smoothened by the tip surface 4 and lacked any apparent unevenness (refer to FIG. 3(c)), and a processed surface (mirror surface) having a beautiful luster could be achieved. Furthermore, the present example is capable of making a cut due to having a cutting edge, and is capable of performing finishing in a shorter time than prior-art variants because the present example is usable for a normal level of finishing and further performs cutting efficiently using the cutting edge without requiring a severe processing environment as compared to finishing tools having only a sphere surface, such as the tool in Patent Document 1.

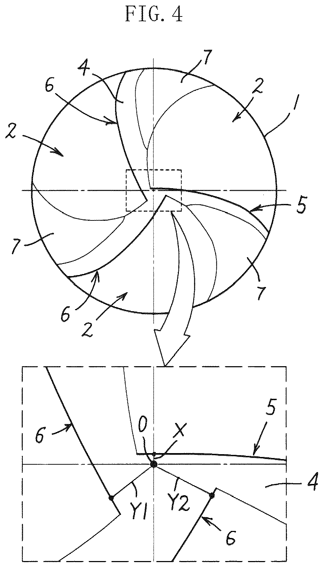

In addition, while the present example described a two-edge ball end mill, the same applies to ball end mills having three or more edges. In such a case, in a three-edge ball end mill, for example, the ball-nosed end cutting edges can be disposed non-symmetrically with respect to the tool rotation center O, and the distances X, Y1, Y2 from the tool rotation center O to the points closest to the tool rotation center O can take the smallest ball-nosed end cutting edge to be the center-nearing ball-nosed end cutting edge 5, as in separate example 1 illustrated in FIG. 4.

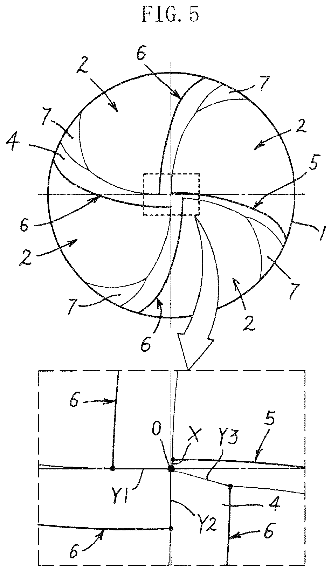

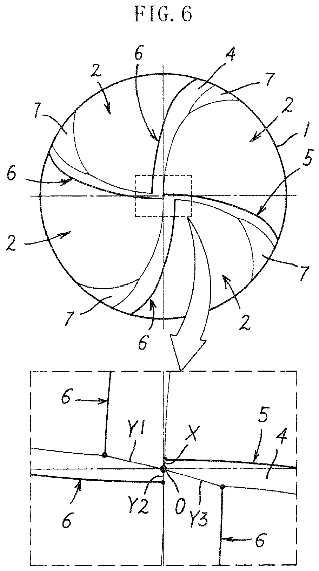

In a four-edge ball end mill, the ball-nosed end cutting edges can be disposed non-symmetrically with respect to the tool rotation center O, and the distances X, Y1, Y2, Y3 from the tool rotation center O to the points closest to the tool rotation center O can take the smallest ball-nosed end cutting edge to be the center-nearing ball-nosed end cutting edge 5, as in separate example 2 illustrated in FIG. 5 and separate example 3 illustrated in FIG. 6. Separate example 2 is a configuration in which one of the ball-nosed end cutting edges comes extremely close to the tool rotation center O, and separate example 3 is a configuration in which the distances X, Y2 from the tool rotation center O to the points closest to the tool rotation center O on a pair of ball-nosed end cutting edges that sandwich the tool rotation center O come comparatively close to the tool rotation center O.

As a result of the above configuration, in the present example, cutting is performed by the ball-nosed end cutting edges 5, 6 and polishing is performed by the tip surface 4. Namely, by cutting a workpiece surface and rubbing the cut surface, a lustrous processed surface having a low surface roughness can be obtained.

Furthermore, biting performance on the workpiece is improved and cutting resistance is lowered even without having a chisel edge on the tip part because of the presence of a center-nearing ball-nosed end cutting edge 5 that is disposed so as to be biased toward the rotation center. In addition, rigidity is increased near the center due to the other ball-nosed end cutting edge 6 being positioned away from the center and not coming close to the center. Accordingly, damage to the ball-nosed end cutting edges 5, 6 and deterioration of the characteristics of the workpiece surface can be suppressed.

Therefore, the present invention is a practical ball end mill which is capable of performing both cutting and polishing well and in which cutting resistance at the tip part is low.

Experiment examples that support the effects of the present example are described hereinafter.

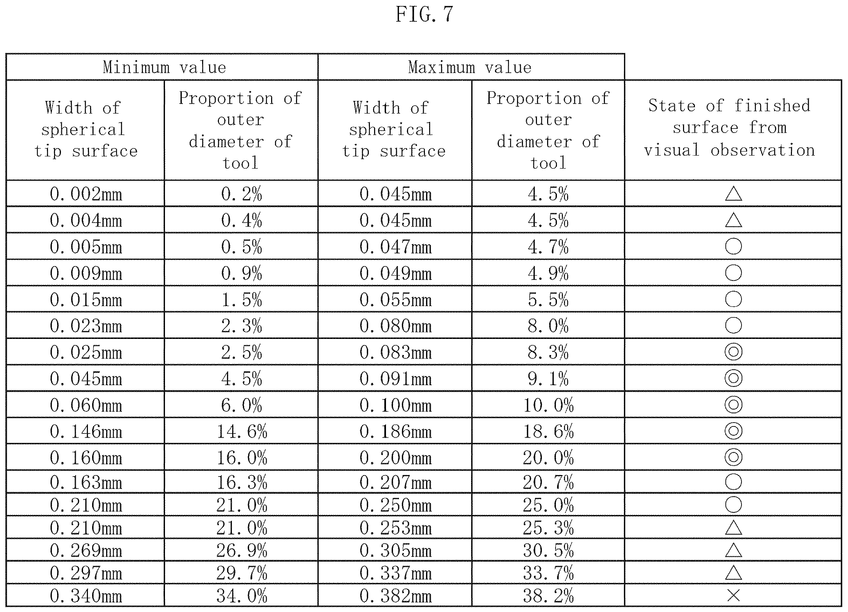

FIG. 7 shows experiment results in which the state of the processed surface (finished surface) with respect to the edge-perpendicular width W is compared. Here, in the judgment of the state of the finished surface by visual observation, especially good results were marked with ⊚, good results were marked with O, results equal to prior-art variants having hemispherical tips were marked with Δ, and results inferior to prior-art variants were marked with ×.

Specifically, a two-edge ball end mill as in the present example and having an outer diameter of 1 mm was used to process high-speed tool steel (64 HRC) as a work material under the conditions of a rotational speed of 30000 min⁻¹, a feeding speed of 750 mm/min, a finishing allowance of 0.005 mm, and a pick feed of 0.02 mm.

It was confirmed as a result that it was especially preferable to set the minimum and maximum values of the width W to be within the range of 2.5-20% inclusive of the outer diameter of the tool (as described above, the width W in the tool as in the present example has a minimum value in the region on the side of the center-nearing ball-nosed end cutting edge 5 oriented rearward with respect to the tool-rotation direction, and a maximum value in the region on the side of the ball-nosed end cutting edge 6 oriented rearward with respect to the tool-rotation direction). Furthermore, similar results were confirmed to be obtainable in cases of different outer diameters of the tool.

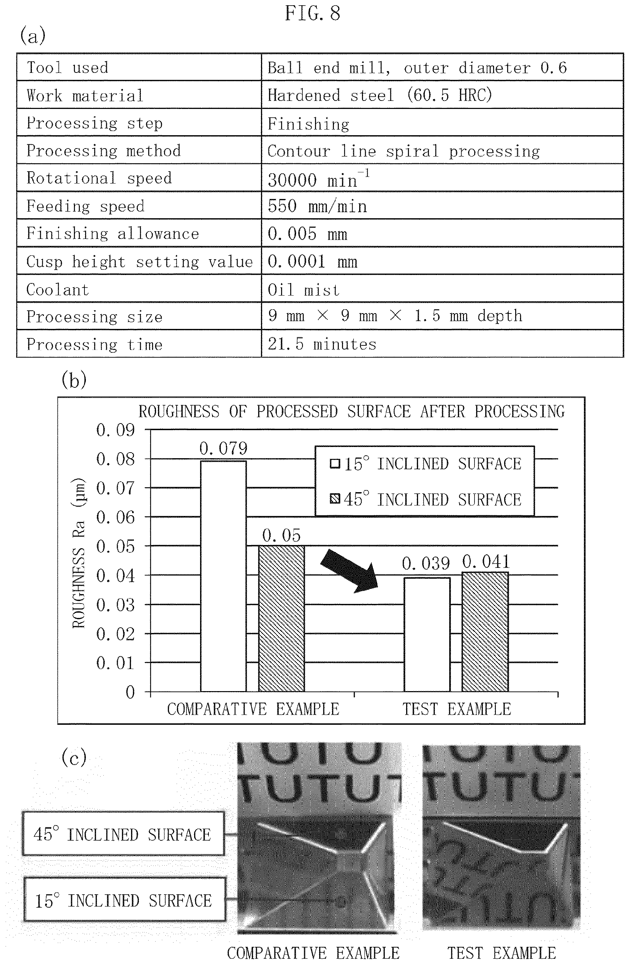

FIG. 8 shows results in which the surface roughness and surface state of processed surfaces processed by a conventional example (normal rotational cutting tool in which the cutting edge is formed on a crossing ridgeline part between a rake surface and a flank) and by the experiment example as in the present example were compared, the processing being performed by finishing workpiece surfaces at a cutting depth of 0.005 mm. FIG. 8(a) shows the specifications and experiment conditions of the experiment example. In addition, the edge-perpendicular width W of the tip surface 4 of the experiment example was set to have a minimum value of 0.041 mm (6.8% of the outer diameter of the tool) and a maximum value of 0.065 mm (10.8% of the outer diameter of the tool).

It was confirmed from the experiment results that the processed surface processed by the experiment example had a lower surface roughness in both a 15° inclined surface and a 45° inclined surface (FIG. 8(b)) and a more lustrous surface similar to a mirror surface (FIG. 8(c)).

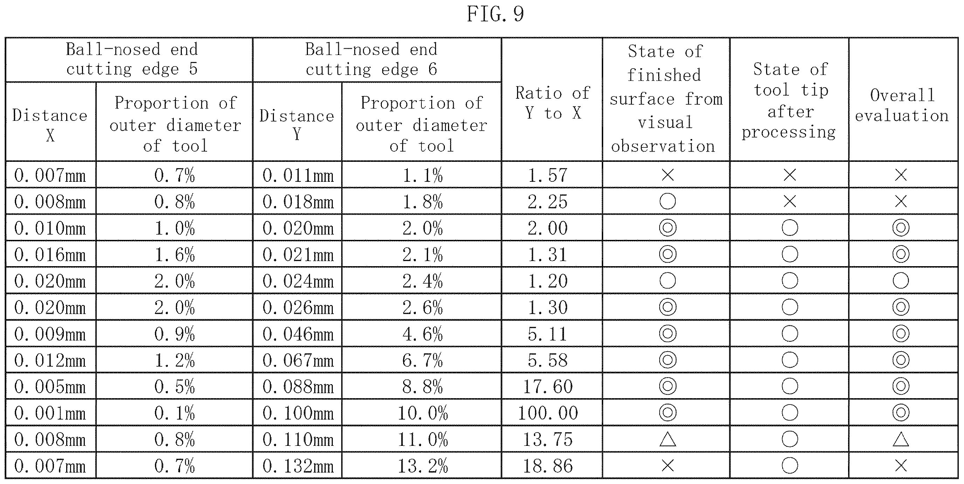

FIG. 9 shows experiment results in which the processed surface (finished surface), state of the tool tip, and overall evaluation with respect to the distance X from the tool rotation center O to the point closest to the tool rotation center O on the center-nearing ball-nosed end cutting edge 5 and the same distance Y to the other ball-nosed end cutting edge 6 were compared. Here, in the visual observation of the state of the finished surface, especially good results were marked with ⊚, good results were marked with ○, results equal to prior-art variants having hemispherical tips were marked with Δ, and results inferior to prior-art variants were marked with ×. Furthermore, pertaining to the state of the tool tip after processing, results in which no abnormal damage to the tool tip was observed after processing were marked with ○, and results in which there was abnormal damage such as large defects or microscopic chips were marked with ×. Subsequently, the overall evaluation that combined the finished surface and state of the tool is similarly indicated with ⊚, ○, Δ, and ×.

Specifically, a two-edge ball end mill as in the present example and having an outer diameter of 1 mm was used to process high-speed tool steel (64 HRC) as a work material under the conditions of a rotational speed of 30000 min⁻¹, a feeding speed of 750 mm/min, a finishing allowance of 0.005 mm, and a pick feed of 0.02 mm.

It could be confirmed as a result that it is preferable to set the distance Y from the tool rotation center O to the point closest to the tool rotation center O on the ball-nosed end cutting edge 6 to be 2-10% inclusive of the outer diameter of the tool and at least 1.3 times the distance X.

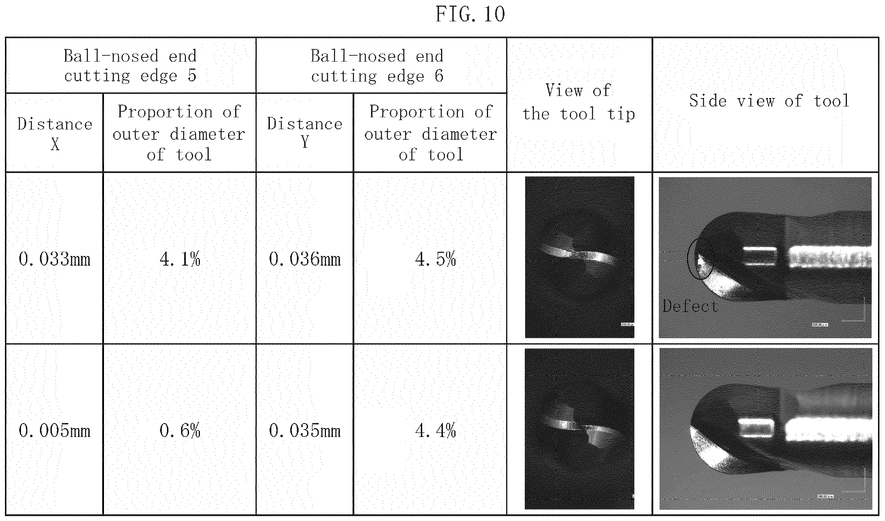

FIG. 10 shows experiment results for the distance X from the tool rotation center O to the point closest to the tool rotation center O on the center-nearing ball-nosed end cutting edge 5 and the state of the tool at the tip part of the tool.

Specifically, a two-edge ball end mill as in the present example and having an outer diameter of 0.8 mm was used to process high-speed tool steel (64 HRC) as a work material under the conditions of a rotational speed of 30000 min⁻¹, a feeding speed of 750 mm/min, a finishing allowance of 0.005 mm, and a pick feed of 0.016 mm.

It could be confirmed as a result that cutting resistance can be lowered and tool damage suppressed by placing the center-nearing ball-nosed end cutting edge 5 so that the distance X from the tool rotation center O to the point closest to the tool rotation center O is 0.005 mm and so that the center-nearing ball-nosed end cutting edge 5 is biased toward the center of the tool by 0.6% of the outer diameter of the tool.

In addition, it is possible to confirm whether the tip surface of a ball end mill is the tip surface 4 in the present example by performing a sphere surface measurement that uses a generic three-dimensional-shape-measuring device that can be of a contact type or a non-contact type, such as a contact-probe-type three-dimensional-shape-measuring device or a laser-probe-type three-dimensional-shape-measuring device (laser microscope). Specifically, any tip surface that can be confirmed to not be a flat flank that has been processed with a grindstone, etc.; i.e., a flat surface, and to have a curved surface shape that roughly conforms to a convex sphere surface that has the tool rotation center O as the apex, is acceptable.

It is possible, for example, to use a laser microscope (e.g., the shape analysis laser microscope VK-X160 manufactured by Keyence Corp.) as a measuring device to perform the confirmation by doing the following.

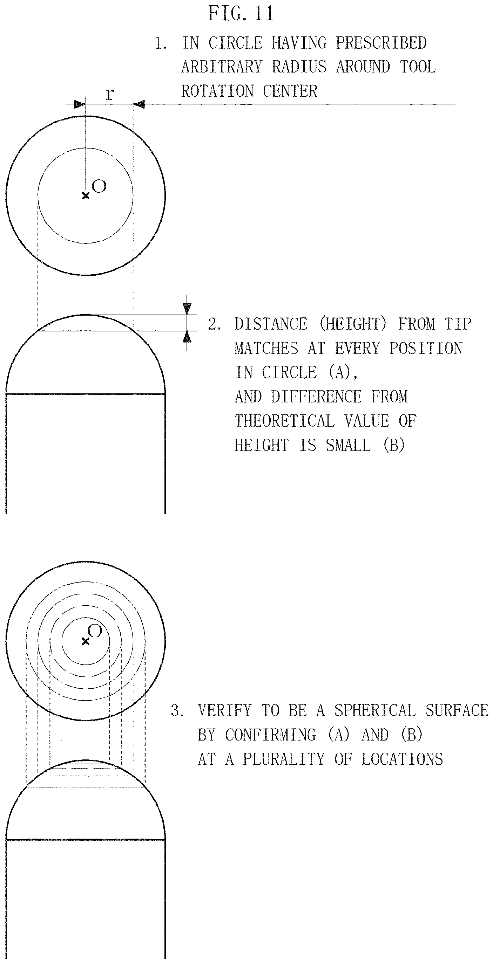

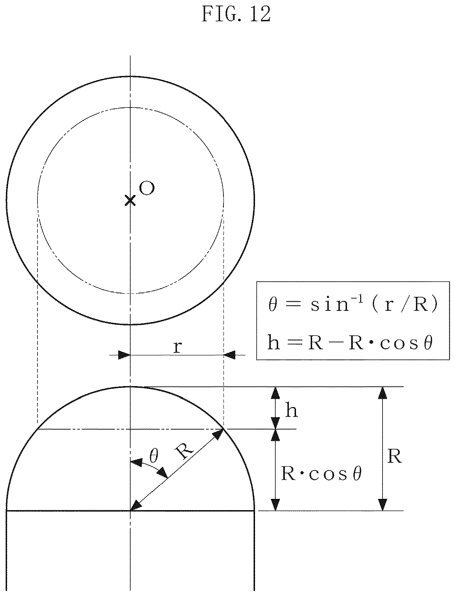

As illustrated in FIG. 11, when a circle having an arbitrary radius *r* around a section that is the apex when a sphere (hemisphere) is viewed from the front is drawn, the height (height in the axial direction of the tool) is the same in any section of the circle that has the radius *r* (A).
Furthermore, as illustrated in FIG. 12, the height matches a theoretical height value *h* (*R-R*cos*θ*) as calculated in the side view direction on the basis of the radius *r* and a perfect circle that has the radius *R* of the sphere (B).
Accordingly, a tip surface of a ball end mill in which (A) and (B) are satisfied using a plurality of circles having different radii can be determined to be a spherical surface.

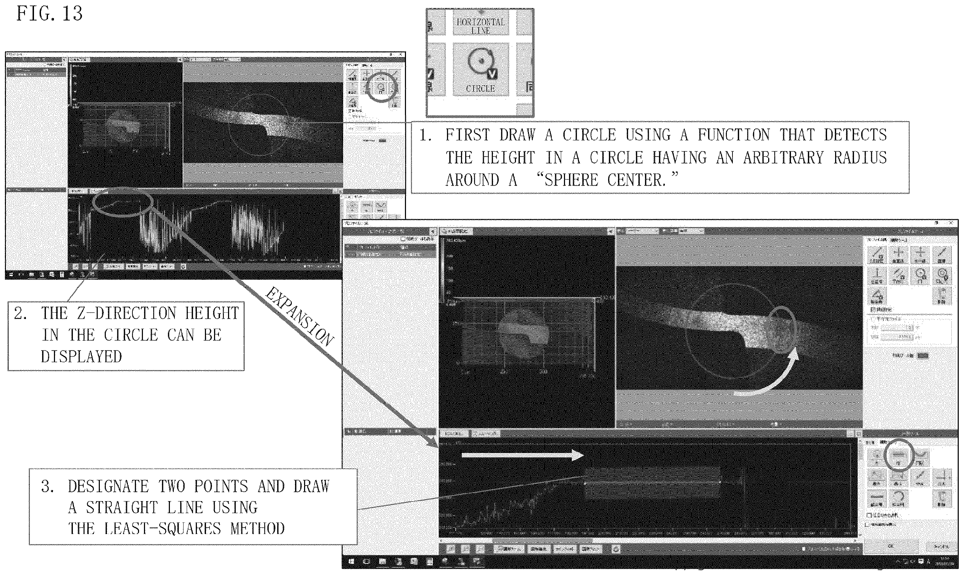

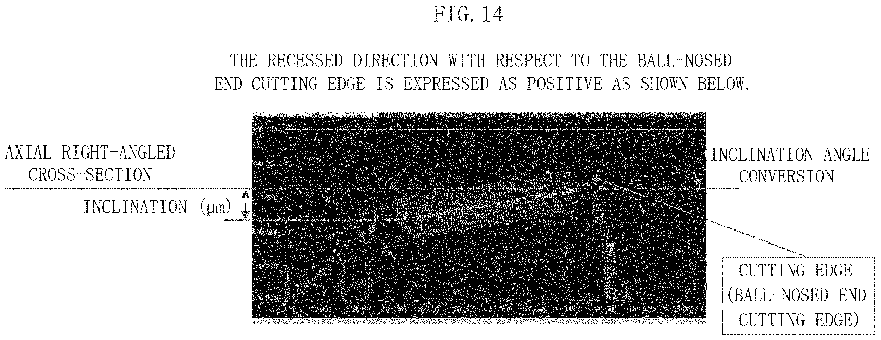

(A) can be confirmed by using a laser microscope to measure Z coordinates (height in the axial direction of the tool) at appropriate intervals in a circle having an arbitrary radius, and drawing an approximation straight line through all the Z-coordinate values in the circle on the tool tip surface by using the least-squares method (FIG. 13). Namely, the inclination of the approximation straight line will be zero if all the Z-coordinate values are identical as per the theoretical values. Thus, a tip surface can be determined to be a spherical surface if the inclination is approximately zero, and can be determined to not have the shape of a sphere surface if the inclination of the approximation straight line is clearly large (for example, ±5° or more). Here, the inclination of the approximation straight line is taken to be positive in the recessed direction with respect to the ball-nosed end cutting edge and negative in the direction of protrusion from the ball-nosed end cutting edge, as illustrated in FIG. 14. Furthermore, the inclination indicates the difference in height between the left and right ends of the approximation straight line when expressed in microns, and indicates the angle with respect to the direction perpendicular to the axis of the approximation straight line when expressed as an angle.

Specifically, although the inclination of the approximation straight line is preferably zero, as described above, a good cutting-traces removal effect is obtainable if the inclination is within the range of at most 2° in the recessed direction with respect to the ball-nosed end cutting edge and at most 2° in the direction of protrusion from the ball-nosed end cutting edge (range of ±2°). Namely, although the tip surface comes into sliding contact with the cutting surface even when recessed slightly in the axial direction with respect to the ball-nosed end cutting edge because the workpiece elastically deforms in the axial direction of the tool when a thrust load is applied during processing and comes into contact with the tip surface when returning from the elastic deformation after the passage of the ball-nosed end cutting edge, the contact amount decreases and the polishing effect is gradually lost the more the inclination exceeds 2°. Furthermore, although the tip surface exhibits a cutting-traces removal effect even when protruding with respect to the ball-nosed end cutting edge, the tip surface excessively rubs the processed surface and gouges the processed surface when protruding greatly and by more than 2°. It is preferable that the inclination is within a range of ±0.5°.

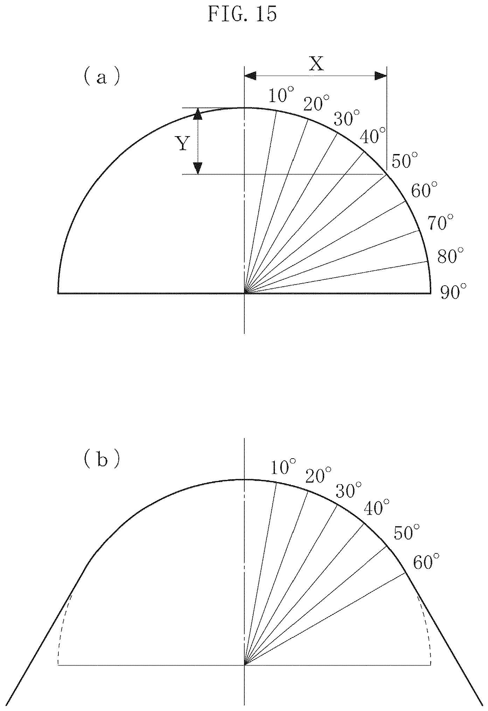

(B) can be confirmed by using a non-contact tool-diameter-measuring machine that uses a CCD camera, for example, to measure the X coordinates (distance from the tool rotation center) and the Y coordinates (distance from the tip) of the 0°, 10°, 20° ... 90° positions of the ball-nosed end cutting edge to be measured from the tool side surface, using the least-squares method to calculate the radius *R* of an approximate circle from the X-Y coordinates measured by the non-contact tool-diameter-measuring machine (refer to FIG. 15), and comparing the theoretical height value *h* calculated from this radius *R* with the height (Z-coordinate values measured by the laser microscope) in the axial direction of the tool in the arbitrary circle.

Specifically, a tip surface that satisfies (A) can be determined to be a spherical surface if the value on the maximum-value side (side protruding on the tool tip side) of the approximation straight line matches or is approximate to the theoretical height value h, and can be determined to not have the shape of a sphere surface when there is a large difference between the value on the maximum-value side of the approximation straight line and the theoretical height value h.

In addition, the X-Y coordinates of the ball-nosed end cutting edge need not necessarily be measured from 0° to 90° in increments of 10°, so long as a plurality of points are measured at a prescribed interval. For example, R can also optionally be calculated not only in normal ball end mills such as in FIG. 15(a) but in tapered ball end mills such as in FIG. 15(b) by measuring the X-Y coordinates of the ball-nosed end cutting edge from 0° to 60° in increments of 10°.

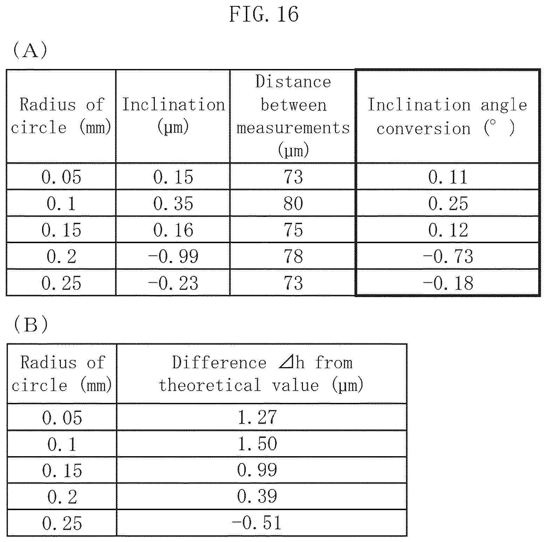

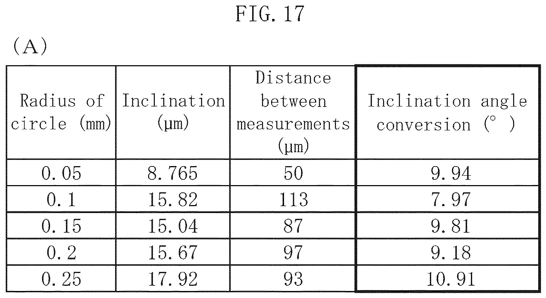

FIG. 16 shows measurement results for (A) and (B) for a ball end mill as in the present example in which the nominal R is actually 0.5 mm, and FIG. 17 shows measurement results for (A) for a prior-art variant (an example having a generic flank and not a spherical surface).

(A) was confirmed by measuring Z coordinates at respective prescribed intervals in circles having radii of 0.05, 0.1, 0.15, 0.2, and 0.25 mm around the tool rotation center of the ball end mill, and drawing an approximation straight line through all the Z-coordinate values in the circles on the tool tip surface by using the least-squares method.

As pertains to (B), the actual R of the ball end mill as in the present example was 0.5018 mm when the actual R of the ball end mill was measured. (B) was confirmed by comparing the theoretical height value h, as can be calculated from an approximate circle in which R=0.5018 mm, with the Z coordinates (maximum value of the approximation straight line). Confirmation for (B) was not carried out for the prior-art variant because it was clear the prior-art variant does not satisfy (A).

It could be confirmed from these results that the ball end mill as in the present example was a spherical surface because the inclination of the approximation straight line was approximately zero whether expressed in microns or as an angle, and the difference between the theoretical height value h and the Z coordinates (maximum value of the approximation straight line) was also approximately zero.

The prior-art variant could be confirmed to have a clear inclination in the approximation straight line, and could be confirmed to not have the characteristics of a sphere surface and to not be a spherical surface.

### [Key]

- 1: Tool body
- 2: Chip discharge groove
- 3: Rake surface
- 4: Tip surface
- 5, 6: Ball-nosed end cutting edge
- 7: Flank
- O: Tool rotation center
- W: Edge-perpendicular width of tip surface
- X, Y: Distance from tool rotation center

## Claims

1. A ball end mill formed with a plurality of chip discharge grooves (2) on an outer periphery of a tool body (1) from a tool tip toward a proximal end side, and provided with a plurality of ball-nosed end cutting edges (5, 6) on a crossing ridgeline part between a rake surface (3) of the chip discharge grooves and a tip surface (4) of the tool body, the ball end mill having a tool rotation center (O) on the tip surface, the tip surface being shaped so as to make sliding contact with a surface cut by the ball-nosed end cutting edges, and a center-nearing ball-nosed end cutting edge (5) of the plurality of ball-nosed end cutting edges (5, 6) set so that a distance (X) from the tool rotation center to the point closest to the tool rotation center on the center-nearing ball-nosed end cutting edge (5) in an axial view of the tool tip is shorter than a same distance (Y) to the other one or ones of the plurality of ball-nosed end cutting edges (6),
wherein the distance (X) from the tool rotation center (O) to the point closest to the tool rotation center (O) on the center-nearing ball-nosed end cutting edge (5) is more than 0% and at most 3% of the outer diameter of the tool.

2. The ball end mill according to claim 1, wherein a flank (7) is provided so as to be connected to the side of the tip surface oriented rearward with respect to the tool-rotation direction.

3. The ball end mill according to claim 1 or 2, wherein an edge-perpendicular width (W) of the tip surface is 0.5-25% inclusive of the outer diameter of the tool.

4. The ball end mill according to claim 3, wherein the edge-perpendicular width of the tip surface is 2.5-20% inclusive of the outer diameter of the tool.

5. The ball end mill according to any one of claims 1-4, wherein the distance from the tool rotation center to the point closest to the tool rotation center on the other one or ones of the plurality of ball-nosed end cutting edges that is or are not the center-nearing ball-nosed end cutting edge is 2-10% inclusive of the outer diameter of the tool and at least 1.3 times the distance from the tool rotation center to the point closest to the tool rotation center on the center-nearing ball-nosed end cutting edge.

6. The ball end mill according to any one of claims 1-5, wherein the number of ball-nosed end cutting edges is exactly two, three, or four.

7. The ball end mill according to any one of claims 1-6, wherein the tip surface (4) is a sphere surface, or has a shape that approximates a convex sphere surface having the tool rotation center (O) as the apex, or a shape that includes a convex curved surface.

## Patentansprüche

1. Kugelschaftfräser, der mit mehreren Spanauswurfnuten (2) an einem Außenumfang eines Werkzeugkörpers (1) von einer Werkzeugspitze in Richtung einer Seite eines proximalen Endes ausgebildet ist und mit mehreren kugelförmigen Endschneidkanten (5, 6) an einem Kreuzungsgratteil zwischen einer Spanfläche (3) der Spanauswurfnuten und einer Endfläche (4) des Werkzeugkörpers versehen ist, wobei der Kugelschaftfräser ein Werkzeugrotationszentrum (O) auf der Endfläche aufweist, die Endfläche so geformt ist, dass sie in Gleitkontakt mit einer von den kugelförmigen Endschneidkanten zu schneidenden Oberfläche kommt, und eine sich dem Zentrum nähernde kugelförmige Endschneidkante (5) der mehreren kugelförmigen Endschneidkanten (5, 6) so eingestellt ist, dass ein Abstand (X) von dem Werkzeugrotationszentrum zu dem Punkt, der dem Werkzeugrotationszentrum am nächsten ist, auf der sich dem Zentrum nähernden kugelförmigen Endschneidkante (5) in einer axialen Ansicht der Werkzeugspitze kürzer ist als ein selber Abstand (Y) zu der anderen oder den anderen der mehreren kugelförmigen Endschneidkanten (6),
wobei der Abstand (X) von dem Werkzeugrotationszentrum (O) zu dem Punkt, der dem Werkzeugrotationszentrum (O) am nächsten ist, auf der sich dem Zentrum nähernden kugelförmigen Endschneidkante (5) mehr als 0% und maximal 3% des Außendurchmessers des Werkzeugs beträgt.

2. Kugelschaftfräser nach Anspruch 1, bei dem eine Freifläche (7) so vorgesehen ist, dass sie mit der Seite der Endfläche, die in Bezug auf die Werkzeugrotationsrichtung nach hinten zeigt, verbunden ist.

3. Kugelschaftfräser nach Anspruch 1 oder 2, bei dem eine Breite (W) senkrecht zur Kante der Endfläche 0,5-25% einschließlich des Außendurchmessers des Werkzeugs beträgt.

4. Kugelschaftfräser nach Anspruch 3, bei dem die Breite senkrecht zur Kante der Endfläche 2,5-20% einschließlich des Außendurchmessers des Werkzeugs beträgt.

5. Kugelschaftfräser nach einem der Ansprüche 1-4, bei dem der Abstand von dem Werkzeugrotationszentrum zu dem Punkt, der dem Werkzeugrotationszentrum am nächsten ist, auf der oder den anderen der mehreren kugelförmigen Endschneidkanten, die nicht die sich dem Zentrum nähernde kugelförmige Endschneidkante ist oder sind, 2-10% einschließlich des Außendurchmessers des Werkzeugs und mindestens das 1,3-fache des Abstands von dem Werkzeugrotationszentrum zu dem Punkt, der dem Werkzeugrotationszentrum am nächsten ist, auf der sich dem Zentrum nähernden kugelförmigen Endschneidkante beträgt.

6. Kugelschaftfräser nach einem der Ansprüche 1-5, bei dem die Anzahl von kugelförmigen Endschneidkanten genau zwei, drei oder vier beträgt.

7. Kugelschaftfräser nach einem der Ansprüche 1-6, bei dem die Endfläche (4) eine Kugelfläche ist oder eine Form, die annähernd eine konvexe Kugelfläche, die das Werkzeugrotationszentrum (O) als den Apex hat, ist, oder eine Form, die eine konvexe gekrümmte Oberfläche aufweist, hat.

## Revendications

1. Fraise à embout sphérique formée d'une pluralité de rainures d'évacuation de copeaux (2) sur une périphérie extérieure d'un corps d'outil (1) à partir d'une pointe d'outil vers un côté d'extrémité proximale, et pourvue d'une pluralité d'arêtes de coupe à embout sphérique (5, 6) sur une ligne de crête croisée entre une surface d'angle d'inclinaison (3) des rainures d'évacuation de copeaux et une surface de pointe (4) du corps d'outil, la fraise à embout sphérique ayant un centre de rotation d'outil (O) sur la surface de pointe, la surface de pointe étant façonnée de manière à établir un contact glissant avec une surface découpée par les arêtes de coupe à embout sphérique, et une arête de coupe à embout sphérique proche du centre (5) de la pluralité d'arêtes de coupe à embout sphérique (5, 6) réglée de manière à ce qu'une distance (X) du centre de rotation d'outil au point le plus proche du centre de rotation d'outil sur l'arête de coupe à embout sphérique proche du centre (5) dans une vue axiale de la pointe d'outil soit plus courte qu'une même distance (Y) à l'autre ou aux autres arêtes de coupe de la pluralité d'arêtes de coupe à embout sphérique (6),
dans lequel la distance (X) du centre de rotation d'outil (O) et le point le plus proche du centre de rotation d'outil (O) sur l'arête de coupe à embout sphérique proche du centre (5) est supérieure à 0 % et au plus égale à 3 % du diamètre extérieur de l'outil.

2. Fraise à embout sphérique selon la revendication 1, dans lequel un flanc (7) est pourvu pour être relié au côté de la surface de pointe orienté vers l'arrière par rapport à la direction de rotation d'outil.

3. Fraise à embout sphérique selon la revendication 1 ou 2, dans lequel la largeur perpendiculaire au bord (W) de la surface de pointe est comprise entre 0,5 et 25 % du diamètre extérieur de l'outil.

4. Fraise à embout sphérique selon la revendication 3, dans laquelle la largeur perpendiculaire au bord de la surface de pointe est comprise entre 2,5 et 20 % du diamètre extérieur de l'outil.

5. Fraise à embout sphérique selon l'une quelconque des revendications 1 à 4, dans lequel la distance entre le centre de rotation d'outil et le point le plus proche du centre de rotation d'outil sur l'autre ou les autres arêtes de coupe de la pluralité d'arêtes de coupe à embout sphérique qui sont ou ne sont pas l'arête de coupe à embout sphérique proche du centre est de 2 à 10 % inclus du diamètre extérieur de l'outil et au moins 1,3 fois la distance entre le centre de rotation d'outil et le point le plus proche du centre de rotation d'outil sur l'arête de coupe à embout sphérique proche du centre.

6. Fraise à embout sphérique selon l'une quelconque des revendications 1 à 5, dans lequel le nombre d'arêtes de coupe à embout sphérique est exactement de deux, trois ou quatre.

7. Fraise à embout sphérique selon l'une quelconque des revendications 1 à 6, dans lequel la surface de pointe (4) est une surface sphérique, ou a une forme qui se rapproche d'une surface sphérique convexe ayant le centre de rotation d'outil (O) comme sommet, ou une forme qui comprend une surface incurvée convexe.
